Europäisches Patentamt

European Patent Office

Office européen des brevets

(11) Publication number: **0 287 149**
**A2**

## (12) EUROPEAN PATENT APPLICATION

(21) Application number: 88200592.9

(22) Date of filing: 29.03.88

(51) Int. Cl.⁴: **G01B 7/30** , **G01B 7/18** ,
**G01R 17/10**

(30) Priority: 31.03.87 NL 8700750

(43) Date of publication of application:
**19.10.88 Bulletin 88/42**

(84) Designated Contracting States:
**AT BE CH DE ES FR GB GR IT LI LU NL SE**

(71) Applicant: **Schutte, Hendrikus Herman**
**Schimmelpenninckstraat 18**
**NL-3813 AJ Amersfoort(NL)**

Applicant: **Van Renesse, Boudewijn**
**Groningerstraat 161**
**NL-9493 PA Punt(NL)**

Applicant: **Schutte, Johannes**
**Schimmelpenninckstraat 18**
**NL-3813 AJ Amersfoort(NL)**

(72) Inventor: **Schutte, Hendrikus Herman**
**Schimmelpenninckstraat 18**
**NL-3813 AJ Amersfoort(NL)**
Inventor: **Van Renesse, Boudewijn**
**Groningerstraat 161**
**NL-9493 PA Punt(NL)**
Inventor: **Schutte, Johannes**
**Schimmelpenninckstraat 18**
**NL-3813 AJ Amersfoort(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) **Angle measuring device.**

(57) An angle measuring device for the measurement of angles, comprising two rigid rodlike elements which are intended to be pressed upon two objects which subtend an angle to be measured, and an angle transducer of elastic material between the two rodlike elements. Upon said angle transducer, in longitudinal direction, at least one strain sensor is provided, the change of resistance of which - when the angle transducer is bent over the angle to be measured resulting in a change of length of said strain sensor - is a measure for the angle subtended by the two rodlike elements. An electronic measuring means is connected to the strain sensor. The rodlike elements each have at least one flattened pressing side and the angle transducer comprises a flat strip of a material which withstands any permanent deformation and which flat strip is fastened, parallel to the flattened pressing sides, between the rodlike elements. The thickness of the flat strip, along its whole length, is constant and the direction of bending is in a plane perpendicular to the flattened sides of the rodlike elements. The strain sensor is durably fastened on at least one broad side of the flat strip along its whole length, which strain sensor comprises a metal layer.

# fig-1

## Angle measuring device

The present invention relates to an angle measuring device for the measurement of angles, comprising two rigid rodlike elements which are intended to be pressed upon two objects which subtend an angle to be measured, and an angle transducer of elastic material between the two rodlike elements, upon which angle transducer, in longitudinal direction, at least one strain sensor is provided, the change of resistance of which - when the angle transducer is bent over the angle to be measured resulting in a change of length of said strain sensor -is a measure for the angle subtended by the two rodlike elements, and that an electronic measuring means is connected to the strain sensor.

Such an angle measuring device is known from GB-A-2099155. This angle measuring device comprises a round rod of thermoplastic material, the flexible central section of which is realised by alternatingly cut cross-slots. Furthermore four strain transducers are provided equally spaced around the circumference of the rod, each in the form of a fine tube of rubber filled with mercury. To protect the transducers the rod is covered with a thin latex tube. This goniometer thereby has a vulnerable and cumbrous construction and is only suitable for the measurement of angles of body portions of humans and animals.

Furthermore angle measuring devices, such as bevels, are known in the practice of carpentry or building. Such angle measuring devices are very unprecise.

The invention now aims to provide a very precise angle measuring device, which at the same time has a simple construction, in which the strain sensors form an integral portion of the angle transducer.

This object is attained in an angle measuring device of the type mentioned in the preamble such that the rodlike elements each have at least one flattened pressing side and that the angle transducer comprises a flat strip of a material which withstands any permanent deformation, and which flat strip is fastened, parallel to the flattened pressing sides, between the rodlike elements, that the thickness of the flat strip, along its whole length, is constant and the direction of bending is in a plane perpendicular to the flattened sides of the rodlike elements, and that a strain sensor is durably fastened on at least one broad side of the flat strip along its whole length.

The invention will be explained by means of an exemplary embodiment thereof using the figures 1, 2 and 3.

Figure 1 diagramatically illustrates an example of a hand-held measuring device according to the invention.

Figure 2 is a cross-section of the angle transducer between the two rigid elements of fig. 1.

Figure 3 shows an example of a simple electronic circuit for the reading of the angles.

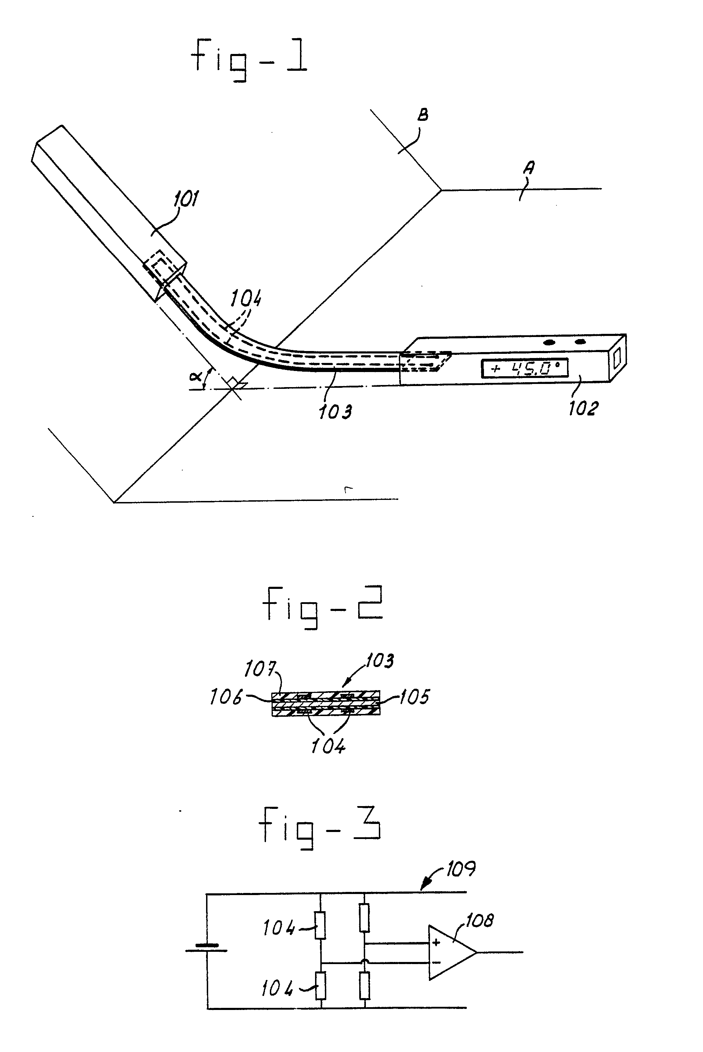

The angle measuring device in fig. 1 includes two longitudinal rodlike elements 101 and 102 having at least one flattened side but preferably two parallel flat sides. Said longitudinal elements are interconnected by the elastic strip 103 in such a way that the broad sides of strip 103 are mounted parallel to the flattened sides of elements 101 and 102. The elastic strip 103 is constructed from plastic, steel covered with plastic, or any other elastic and firm material, which retains its original form and has a size of approximately 0,3 x 8 x 150 millimeters. The elastic strip 103 has a constant thickness along its whole length. It is covered on one or both sides with one or more strain sensors or gauges 104 of sufficient length to cover the whole length of the elastic strip 103, including both ends which are firmly tightened in the two elements 101 and 102.

Fig. 2 is an illustration of a cross-sectional view of the elastic strip 103 showing the core element 105 made e.g. from plastic or hardened steel or any other tough, elastic material covered with a strong plastic electrically insulating film 106 e.g. made from polyimide, and this covered by a plastic layer 107, e.g. polyimide or epoxy. In the case that electrically insulating material is used for the core element 105, the electric insulating film 106 may be omitted. It is essential that the thickness of core element 105 plus the layer 106 is homogeneous, with an accuracy of ± 1 micrometer or less.

The strain sensors 104 are contained within the layer 107 and are firmly attached to layer 106, or directly to core element 105 in the case element 105 is made from electrically insulating material. In the illustration in fig. 2 only two strain sensors on each side of element 105 are drawn, but the actual amount of strain sensors is not limited to two and they may be fastened in loop-form.

Such a strain sensor preferably consists of a metal layer, which is directly applied onto the core element 105 of plastic and which has a thickness of about 0,1 to 1 micrometer. On both ends and on both sides of the metal layer a thicker metal layer is provided over a length of about 5 mm for fixation of electrical connections to the measuring means. The metal layer may consist of one of the elements of the group of Cr, Ni, Cn, Mn, Fe, or an alloy thereof like CrNi, the electric resistance of which increases or decreases upon stretching or contracting the flat strip respectively. Said metal layer can be applied by direct evaporation or by sputtering onto the flat strip. In order to compensate for possible thickness variations, occurring along the length of the strip, the width of the metal layer on both sides is varied in relation with the thickness variations.

The angle measuring device which is illustrated in fig. 1 is constructed in such a way that the direction of possible bending of the elastic flat strip 102 will most easily occur in a plane which is perpendicular to the flattened sides of the elements 101 and 102. The angle between two objects is measured by pressing a flattened side of each of the elements 101 and 102 against the objects (for instance surfaces A and B in figure 1 which subtend angle α), thereby causing a bending of the elastic strip 103.

In the example of fig. 1 the connections of the strain sensors 104 are within element 102, which element contains the electronic measuring circuitry 109 of which the strain sensor resistance(s) form an integral part. In order to provide the measured result to an observer a digital display is included in element 102, e.g. a liquid crystal display, to be driven by the electronic measuring circuitry. The electronic measuring circuitry may be integrated into one large scale integrated circuit, or may be constructed from several discrete components. The angle may be shown either in degrees or in radians. There is a possibility to hold a measured angle on the display.

The working principle of angle measurement according to this invention is based on the elongation and/or shortening of the strain sensor or sensors 104, mounted in the elastic strip 103. Irrespective of the actual shape of bending of the elastic strip 103, the integral elongation of a strain sensor at the outer side of the bended strip or the integral shortening of a strain sensor at the inner side of the bended strip is a function only of the change of inclination between the tangentials of the two outer ends of strip 103. The total change of the resistance of the strain sensor is an integration over the whole legnth of local changes in resistance. Since (local) changes in length of the strain sensor are proportional to resistance of the strain sensor, the integrated change in resistance is therefore a function only of the change of inclination between the tangentials of the two outer ends of strip 103. Any bending of the elastic strip 103 is allowed, provided that no permanent deformation of strip 103 or a strain sensor 104 is introduced. This ensures optimal flexibility in applying this invention. It is even possible to measure angles between objects when the intersection of the planes is outside the reach of the angle measuring device, such as between two (almost) parallel surfaces.

Since the change of electric resistance of a strain sensor is an approximate linear function of its elongation or shortening, provided that this elongation or shortening is between certain limits, the transfer of the angle to be measured into an electronic signal is easily performed by integrating the strain sensor resistance(s) in an electronic circuit, such as a Wheatstone-bridge connected to an amplifier, as shown schematically in figure 3.

In fig. 3, which is only part of the electronic measuring circuit 109, the two strain sensors 104 are serially connected between a supply voltage. The junction between the strain sensors 104 is connected to the negative input of the differential amplifier 108, while the positive input of amplifier 108 is connected to a reference voltage of half of the supply voltage. In this way, or any other way, the differential change of the electric resistance of the two strain sensors 104 may be directly transferred into an electronic signal that can be used to display or record the angle. The use of two strain sensors on oppositie sides of the elastic element 103 ensures correct reading of angles at different temperatures and also correct reading of angles if element 103 is shaped in an S-form.

Further modifications are of course possible within the scope of the invention. For example, the angle measuring device can be used with great advantage in a permanent mounting for the continuous measurement of changing angles. As such it can also be used as a monitoring device which generates a signal when a predetermined angle value is crossed.

## Claims

1. An angle measuring device for the measurement of angles, comprising two rigid rodlike elements which are intended to be pressed upon two objects which subtend an angle to be measured, and an angle transducer of elastic material between the two rodlike elements, upon which angle transducer, in longitudinal direction, at least one strain sensor is provided, the change of resistance of which - when the angle transducer is bent over the angle to be measured resulting in a change of length of said strain sensor - is a measure for the angle subtended by the two rodlike elements, and that an electronic measuring means is connected to the strain sensor, characterized in that the rodlike elements each have at least one flattened pressing side and that the angle transducer comprises a flat strip of a material which withstands any permanent deformation and which flat strip is fastened, parallel to the flattened pressing sides, between the rodlike elements, that the thickness of the flat strip, along its whole length, is constant and the direction of bending is in a plane perpendicular to the flattened sides of the rodlike elements, and that a strain sensor is durably fastened on at least one broad side of the flat strip along its whole length.

2. An angle measuring device according to claim 1, characterized in that a strain sensor is provided on each broad side of the flat strip.

3.- An angle measuring device according to claim 1 or 2, characterized in that the (each) strain sensor comprises a metal layer.

4. An angle measuring device according to claim 1, characterized in that the flat strip exists of plastic.

5. An angle measuring device according to claim 3 or 4, characterized in that the flat strip has dimensions of about 0,3 x 8 x 150 mm, the accuracy of the thickness thereof is 1 $\mu$m or less, and that the thickness of the metal layer is about 0,1 to 1 $\mu$m.

6. An angle measuring device according to claim 3, characterized in that on both ends and on both sides of the metal layer a thicker metal layer is provided over a length of about 5 mm for fixation of electrical connections to the measuring means.

7. An angle measuring device according to claim 3, characterized in that the metal layer consists of one of the elements out of the group of Cr, Ni, Cn, Mn, Fe, or an alloy thereof, the electric resistance of which increases and decreases upon stretching and contracting in longitudinal direction respectively.

8. An angle measuring device according to claim 3, characterized in that the metal layer is evaporated in vacuum onto the flat strip.

9. An angle measuring device according to claim 3, characterized in that the metal layer is provided by sputtering onto the flat strip.

10. An angle measuring device according to claim 5, characterized in that, in order to compensate for possible thickness variations occurring along the length of the strip, the width of the metal layer on both sides is varied in relation with the thickness variations.

11. An angle measurig device according to claim 3 characterized in that the metal layer has a loop-form.

12. An angle measuring device according to claim 1, characterized in that the electronic measuring means is build-in in one of the rodlike elements and is provided with a display.

13. An angle measuring device according to claim 1, to be used for a permanent mounting for the continuous measurement of changing angles.

# Fig-1

# Fig-2

# Fig-3